(19) Europäisches Patentamt
European Patent Office
Office européen des brevets

(11) **EP 0 686 290 B1**

(12) **EUROPÄISCHE PATENTSCHRIFT**

(45) Veröffentlichungstag und Bekanntmachung des Hinweises auf die Patenterteilung:
**27.10.1999 Patentblatt 1999/43**

(21) Anmeldenummer: **94926890.8**

(22) Anmeldetag: **25.08.1994**

(51) Int Cl.⁶: **G06K 7/10**

(86) Internationale Anmeldenummer:
**PCT/EP94/02826**

(87) Internationale Veröffentlichungsnummer:
**WO 95/12861 (11.05.1995 Gazette 1995/20)**

(54) **OPTOELEKTRONISCHE VORRICHTUNG ZUM ERKENNEN VON BARCODE-SYMBOLEN**

OPTO-ELECTRONIC DEVICE FOR RECOGNIZING BAR-CODE SYMBOLS

DISPOSITIF OPTO-ELECTRONIQUE DE RECONNAISSANCE DE SYMBOLES DE CODE A BARRES

(84) Benannte Vertragsstaaten:
**CH DE FR GB IT LI NL**

(30) Priorität: **05.11.1993 DE 4337718**

(43) Veröffentlichungstag der Anmeldung:
**13.12.1995 Patentblatt 1995/50**

(73) Patentinhaber: **Leuze electronic GmbH + Co.**
**D-73277 Owen (DE)**

(72) Erfinder:
• **KEINATH, Armin Dr.**
  **D-72581 Dettingen (DE)**

• **WÖRNER, Jörg**
  **D-70794 Filderstadt (DE)**

(56) Entgegenhaltungen:
**GB-A- 2 143 636          US-A- 4 219 736**
**US-A- 4 323 772**

• **IBM TECHNICAL DISCLOSURE BULLETIN, Bd.17, Nr.3, August 1974 Seiten 726 - 727 L.S. HEIM, V.D. LEE AND R. PUJDOWSKI 'Digital filter for bar-code scanners'**

## Beschreibung

Die Erfindung betrifft ein Verfahren und eine Vorrichtung gemäß den Oberbegriffen des Anspruchs 1 und des Anspruchs 3.

Eine Vorrichtung dieser Art, die zum Lesen von Barcode-Symbolen eingesetzt wird, ist aus der JP4-346184A bekannt. Derartige Vorrichtungen können vorzugsweise als Handlesegeräte ausgebildet sein, die in relativ geringem Abstand über die zu lesenden Barcode-Symbole geführt werden.

Hierzu weist das Sendeelement neben einem Sender, der vorzugsweise als Laser ausgebildet ist, einen Scanner auf, der das Sendelicht periodisch ablenkt und mehrfach über die zu lesenden Barcode-Symbole führt.

Bei derartigen Anwendungen ist es ausreichend, wenn der Sendelichtstrahl mit einer relativ geringen Abtastrate über die Barcodes geführt wird. Typische Abtastraten liegen im Bereich von ca. 30 - 50 Scans / Sekunde.

Das von den Barcode-Symbolen reflektierte Empfangslicht weist entsprechend den Hell-Dunkelübergängen der Barcode-Symbolen eine Amplitudenmodulation auf. Die Signalfrequenzen hängen zum einen vom Barcodemuster, zum anderen von der Abtastrate und dem Leseabstand ab.

Das Empfangslicht wird im Empfangselement, das üblicherweise von einem Photosensor, beispielsweise einer Fotodiode, und einem Verstärker gebildet ist, in ein Spannungssignal umgewandelt und verstärkt.

Die Auswertung der analogen Empfangssignale erfolgt in der Schwellwerteinheit. Die Spannungssignale werden vorzugsweise mit einer Schaltschwelle bewertet, wodurch die hellen Zonen der Barcode-Symbole, denen eine hohe Intensität des Empfangssignals entspricht, von den dunklen Zonen der Barcode-Symbole, denen eine geringe Intensität des Empfangssignals entspricht, unterschieden werden können.

Da die Abtastraten, mit denen die Barcode-Symbole abgetastet werden, relativ gering sind und auch die Leseabstände relativ klein sind und nur geringen Schwankungen unterworfen sind, können die Barcode-Symbole vom Sendelichtstrahl der Vorrichtung aufgelöst werden, d.h. der Intensitätsunterschied zwischen den von den Hell- bzw. Dunkelflächen reflektierten Empfangssignalen ist beträchtlich größer als die Signalverzerrungen, die in den Bauteilen der Empfangselemente erfolgen. Insofern ist eine sichere Detektion der Barcode-Symbole ohne bauseits bedingte Maßnahmen zur Kompensation bauteilbedingter Signalvermessungen gewährleistet.

Aus der US 43 23 772 ist eine Vorrichtung zum Erkennen von Barcode-Symbolen bekannt, deren Empfangselement von einer Zeilenkamera, bestehend aus einer linearen Anordnung von Photodioden, gebildet ist.

Das von der Zeilenkamera registrierte analoge Empfangssignal wird mittels einer Schwellwerteinheit digitalisiert. Dieser Schwellwerteinheit ist ein digitales Filter nachgeschaltet. Mit dem digitalen Filter wird eine Bewertung der Signale derart durchgeführt, daß ein bestimmter Zustand, d.h. ein schwarzes oder weißes Strichelement eines Barcode-Symbols, nur dann als erkannt gilt, wenn wenigstens zwei benachbarte Photodioden dasselbe Empfangssignal liefern. Auf diese Weise können Ausfälle einzelner Photodioden kompensiert werden oder kleine Fehler in den Barcode-Symbolen unterdrückt werden.

Beim Einsatz optoelektronischer Vorrichtungen der eingangs genannten Art in Industrieumgebungen sind jedoch in vielen Fällen höhere Anforderungen an das Auflösungsvermögen der Vorrichtung gegeben. Die Abstände der Vorrichtung zu den Barcode-Symbolen können im Bereich von bis zu einigen Metern liegen und gegebenenfalls sehr stark variieren.

Beispielsweise können Barcode-Symbole auf Paketen unterschiedlicher Größe aufgebracht sein, die auf einem Fließband gefördert werden. Die optoelektronische Vorrichtung ist vorzugsweise in einem festen Abstand oberhalb des Fließbandes angeordnet. Je nach Fließbandgeschwindigkeit, Leseabstand und Größe der Barcode-Symbole können Abtastraten der Vorrichtung erforderlich sein, die im Bereich von 1000 Scans / Sekunde liegen. Typische Abtastraten liegen im Bereich zwischen 300 - 1000 Scans / Sekunde. Bei Abtastraten dieser Größenordnung liegen die Empfangssignalfrequenzen im Bereich 0,5 Mhz und höher.

Bei derartigen Anwendungsfällen sind die hauptsächlich durch die Bauteile des Empfangselementes bedingten Signalverfälschungen in derselben Größenordnung wie die Differenzen der von den Hell- bzw. Dunkelflächen der Barcode-Symbole reflektierten Empfangssignale. Dies kann dazu führen, daß die Barcode-Symbole von der optoelektronischen Vorrichtung nicht mehr fehlerfrei dekodiert werden können.

Der Erfindung liegt die Aufgabe zugrunde, eine optoelektronische Vorrichtung der eingangs genannten Art so auszubilden, daß bei höheren Abtastraten eine sichere Detektion von mit definierten Kontrastmustern versehenen Marken gewährleistet ist.

Zur Lösung dieser Aufgabe sind die Merkmale des Anspruchs 1 und des Anspruchs 3 vorgesehen. Vorteilhafte Ausführungsformen und zweckmäßige Weiterbildungen der Erfindung sind in den Ansprüchen 2 und 4 - 15 vorgesehen.

Der Grundgedanke der Erfindung besteht darin, die Störungen des Empfangssignals, die insbesondere durch das Empfangselement verursacht werden, systematisch zu erfassen und mittels einer Anordnung von digitalen Filtern zu kompensieren. Hierfür ist dem Empfangselement ein n-bit Analog-Digitalwandler nachgeschaltet, der das analoge Empfangssignal in ein digitales Signal umwandelt. Die Auflösung der Analog-Digitalwandlung ist zweckmäßigerweise möglichst groß zu wählen, d.h. die Wortbreite n des Analog-Digitalwandlers ist möglichst groß zu wählen. Dadurch wird ein Informationsverlust bei der Wandlung des Analogsignals in ein Digitalsignal weitgehend vermieden.

Die Kompensation der Verzerrungen des Empfangssignals erfolgt durch eine geeignete Wahl der Übertragungsfunktion der Anordnung von digitalen Filtern, denen das digitalisierte Empfangssignal zugeführt wird.

Zur Bestimmung der Übertragungsfunktion der digitalen Filter ist die Kenntnis der Übertragungsfunktion des Empfangselements oder gegebenenfalls weiterer signalverzerrender Bauelemente notwendig. Die Übertragungsfunktion des Empfangselements wird zweckmäßigerweise experimentell ermittelt.

Die Übertragungsfunktion der Anordnung der digitalen Filter wird so gewählt, daß die Verknüpfung der Übertragungsfunktionen der signalverzerrenden Bauelemente und der digitalen Filter eine frequenzunabhängige Durchlaßcharakteristik für die Phase des Empfangssignals und eine gaussförmige Durchlaßcharakteristik für die Amplitude des Empfangssignals ergibt, d. h. durch die erfindungsgemäße Vorrichtung können gleichermaßen Phasen- und Amplitudenfehler kompensiert werden.

Ein wesentlicher Vorteil der Erfindung besteht darin, daß die Entzerrung des Empfangssignals über digitale Filter erfolgt, die über einen großen Frequenzbereich in ihrer Durchlaßcharakteristik sehr genau dimensioniert werden können. Dadurch können Signalverzerrungen in einem Frequenzbereich bis zu einigen MHz eliminiert werden. Dies bedeutet, daß selbst bei Abtastraten im kHz-Bereich eine fehlerfreie Detektion der Barcode-Symbole gewährleistet ist.

Die durch die signalverzerrenden Bauelemente entstehenden Signalverzerrungen können mittels der erfindungsgemäßen Vorrichtung komplett und systematisch eliminiert werden. Insbesondere können Störungen der Empfangssignale selbst dann eliminiert werden, wenn sie von gleicher Größenordnung wie die Nutzsignale sind.

Die Dimensionierung des digitalen Filters erfolgt über eine geeignete Wahl der Filterkoeffizienten. Diese Filterkoeffizienten sind über ein Softwareprogramm einstellbar. Somit können Bauteiltoleranzen ohne Hardware-Aufwand zeitsparend geändert werden. Die Qualität der Vorrichtung kann somit kostengünstig gesteigert und kontrolliert werden.

In einer zweckmäßigen Ausführungsform der Erfindung wird zur Elimination der Phasenfehler des Empfangssignals ein rekursives IIR-Filter eingesetzt. Zur Elimination der Amplitudenverzerrungen des Empfangssignals wird vorteilhafterweise ein nicht rekursives FIR-Filter eingesetzt.

Diese Filter weisen eine definierte Anzahl frei wählbarer Koeffizienten auf. Durch die Wahl dieser Koeffizienten kann die gewünschte Übertragungsfunktion sehr genau modelliert werden.

Die Erfindung wird im nachstehenden anhand der Zeichnungen erläutert. Es zeigen:

Fig. 1: Ein Prinzipaufbau der optoelektronischen Vorrichtung,

Fig. 2: ein Blockschaltbild der Auswerteeinheit der optoelektronischen Vorrichtung,

Fig. 3: Impulsdiagramm der Signalauswertung in der Schwellwerteinheit mit:

        a) Darstellung eines Barcode-Symbols
        b) Empfangssignal am Eingang der Schwellwerteinheit
        c) differenziertes Empfangssignal
        d) binäre Empfangssignalfolge am Ausgang der Schwellwerteinheit,

Fig. 4:         a) ein Blockschaltbild eines IIR-Filters
                  b) ein Blockschaltbild eines FIR-Filters

Fig. 5: Grenzfrequenz des Empfangssignals in Abhängigkeit des Leseabstandes,

Fig. 6: Frequenzabhängigkeit der Gruppenlaufzeit und der Amplitude des Empfangssignals im Empfangselement,

Fig. 7: Frequenzabhängigkeit der Gruppenlaufzeit und der Amplitude des Empfangssignals in der Anordnung von digitalen Filtern,

Fig. 8: Empfangssignal in Abhängigkeit von der Zeit,

        (1) am Eingang des Empfangselements,
        (2) am Ausgang des Empfangselements,
        (3) am Ausgang des Phasenentzerrers,
        (4) am Ausgang des Impulsformers.

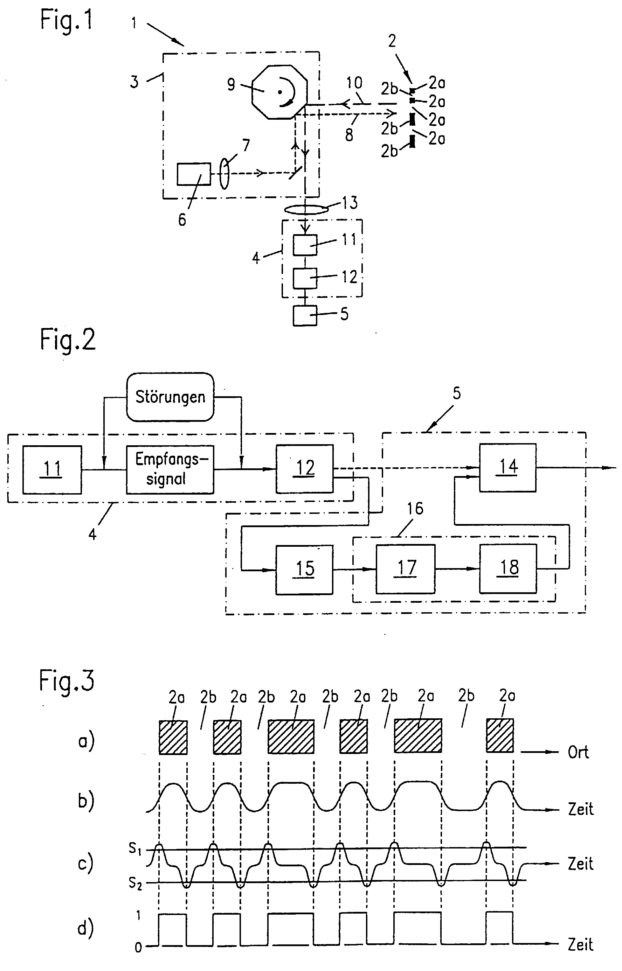

In Fig. 1 ist der prinzipielle Aufbau einer optoelektronischen Vorrichtung 1 zum Erkennen von mit definierten Kontrastmustern versehenen Marken dargestellt. Prinzipiell können die Marken beliebige Folgen und Formen von

EP 0 686 290 B1

aneinander angrenzenden Hell- Dunkelflächen, vorzugsweise Schwarz-Weiß-Flächen, aufweisen. Im folgenden soll die Erfindung für den Fall erläutert werden, daß die Marken von Barcode-Symbolen 2 gebildet sind. Die Barcode-Symbole 2 bestehen im wesentlichen aus einer Folge von schwarzen und weißen Strichelementen 2a, b definierter Länge und Breite.

Die optoelektronische Vorrichtung 1 besteht im wesentlichen aus einem Sendeelement 3, einem Empfangselement 4 sowie einer Auswerteeinheit 5. Das Sendeelement 3 besteht aus einem Sender 6, vorzugsweise einer Laserdiode, sowie aus einer dem Sender 6 vorgeschalteten Sendeoptik 7 zur Fokussierung des Sendelichts 8. Das fokussierte Sendelicht 8 wird über eine Ablenkeinheit 9, die im vorliegenden Ausführungsbeispiel von einem rotierenden Polygonspiegelrad gebildet ist, abgelenkt und über das zu detektierende Barcode-Symbol 2 geführt. Die Drehachse des Polygonspiegelrads ist senkrecht zur in Fig. 1 dargestellten Äquatorialebene des Polygonspiegelrads angeordnet.

Das vom Barcode-Symbol 2 reflektierte Empfangslicht 10 wird über das Polygonspiegelrad zum Empfangselement 4 geführt. Das Empfangselement 4 besteht aus einer Fotodiode 11, in der das Empfangslicht 10 in ein elektrisches Empfangssignal gewandelt wird, und einem dieser nachgeschalteten Verstärker 12. Zur Verbesserung der Nachweisempfindlichkeit ist dem Empfangselement 4 eine Empfangsoptik 13 vorgeschaltet.

Das am Ausgang des Empfangselements 4 anstehende Empfangssignal wird der Auswerteeinheit 5 zugeführt.

Bei optoelektronischen Vorrichtungen gemäß dem eingangs genannten Stand der Technik besteht die Auswerteeinheit 5 lediglich aus einer Schwellwerteinheit 14. Eine derartige Vorrichtung ist in Fig. 2 mit einer gestrichelten Pfeillinie zwischen Verstärker 12 und Schwellwerteinheit 14 veranschaulicht. In diesem Fall wird das Empfangssignal als analoges Signal der Auswerteeinheit 5 zugeführt.

Die Auswerteeinheit 5 der erfindungsgemäßen Vorrichtung 1 weist einen n-bit Analog-Digitalwandler 15 sowie eine diesem nachgeschaltete Anordnung 16 von digitalen Filtern auf, die der Schwellwerteinheit 14 vorgeschaltet sind. Diese Auswerteeinheit 5 ist in Fig. 2 mit den durchgezogenen Pfeillinien gekennzeichnet.

Aus. Fig. 3 ist das Prinzip der Auswertung der Empfangssignale ersichtlich. In Fig. 3 a ist ein Barcode-Symbol 2 mit einer Folge von schwarzen und weißen Strichelementen 2a, b dargestellt. Falls die Kantenfehler des Barcode-Symbols 2 vernachlässigbar klein sind, d.h. die Kontraste zwischen schwarzen und weißen Flächen sehr scharf sind, und falls der Strahl-Durchmesser des Sendelichtes 8 auf dem Barcode-Symbol 2 wesentlich kleiner als die kleinste Breite eines Strichelements 2a, b ist, wird das Sendelicht 8 durch die Reflexion von dem Barcode-Symbol 2 wie in Fig. 3b dargestellt amplitudenmoduliert.

Falls im Empfangselement 4 keine Verzerrung oder Verfälschung des Empfangssignals erfolgt, entspricht der in Fig. 3b dargestellte Kurvenverlauf dem am Ausgang des Empfangselements 3 anstehenden Empfangssignal.

Die Bestimmung der Breite der einzelnen Strichelemente 2a, b des Barcode-Symbols 2 in der Auswerteeinheit 5 erfolgt zweckmäßigerweise nach dem Wendepunktverfahren.

In einem ersten Schritt wird das Empfangssignal differenziert (Fig. 3c). Anschließend werden die Extrema des differenzierten Empfangssignals bestimmt, die den Wendepunkten des Empfangssignals entsprechen. Diese Wendepunkte wiederum definieren die Übergänge von einem schwarzen zu einem weißen Strichelement bzw. umgekehrt.

Zur Bestimmung der Wendepunkte des Empfangssignals wird das differenzierte Empfangssignal mit vorzugsweise zwei Schaltschwellen $S_1$ und $S_2$ (Fig. 3c) in eine binäre Signalfolge (Fig. 3d) umgewandelt. Die Dauer der Zustände '0' und '1' der binären Signalfolge ist ein Maß für die Breite der Strichelemente 2a, b des Barcode-Symbols 2. Die Dauer der Zustände '0' und '1' kann über einen taktgesteuerten Zähler einfach erfaßt werden.

Durch Signalverzerrungen im Empfangselement 4 der optoelektronischen Vorrichtung 1 können sich die Wendepunkte der Empfangssignalfolge so stark verschieben, daß eine Rekonstruktion des Strichmusters des Barcode-Symbols 2 aus dem Empfangssignal nicht mehr möglich ist.

Zur Elimination dieser Signalverzerrungen ist in der Auswerteeinheit 5 die der Schwellwerteinheit 14 vorgeschaltete Anordnung 16 von digitalen Filtern und einen dieser Anordnung 16 vorgeschalteten Analog-Digitalwandler 15 vorgesehen.

Der n-bit Analog-Digitalwandler 15 weist eine Wortbreite im Bereich von n = 8 -- 12 auf. Im vorliegenden Ausführungsbeispiel wird ein 8-bit-Analog-Digitalwandler 15 verwendet Dadurch kann das analoge Empfangssignal mit einer hohen Auflösung in ein digitalisiertes Empfangssignal gewandelt werden.

Die dem Analog-Digitalwandler 15 nachgeschaltete Anordnung 16 von digitalen Filtern besteht aus zwei in Serie geschalteten Filtern. Das erste Filter ist ein Phasenentzerrer 17, der zur Elimination der Phasenverzerrungen des Empfangssignals eingesetzt wird, während das zweite digitale Filter einen Impulsformer 18 darstellt, der zur Elimination der Amplitudenverzerrungen dcs Empfangssignals eingesetzt wird.

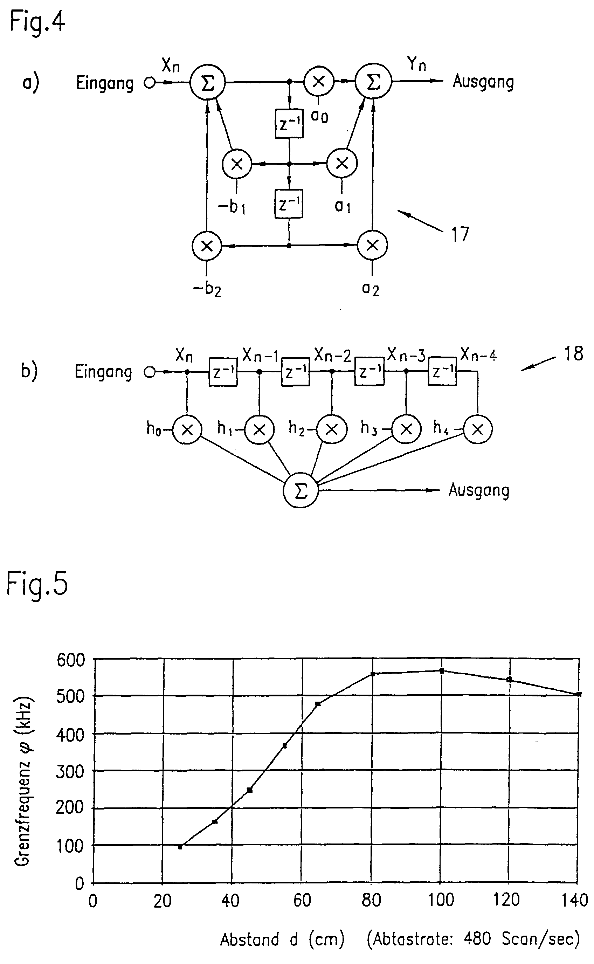

Der Phasenentzerrer 17 ist von einem rekursiven IIR-Filter gebildet. Der prinzipielle Aufbau eines zweifstufigen IIR-Filters ist in Figur 4 a) dargestellt. Die Ausgangsgröße des IIR-Filters $y_n$ zu einem Zeitpunkt n hängt von der Eingangsgröße $x_m$ bei verschiedenen Zeitpunkten m = n, n - 1 n -2, ..., n-M wobei der Zeitpunkt n-M ein bezüglich des Zeitpunkts n um M diskrete Zeitstufen früherer Zeitpunkt ist. Zudem hängt die Ausgangsgröße $y_n$ von der Ausgangsgröße $y_m$ zu verschiedenen früheren Zeitpunkten m = n - 1, n - 2, ..., n-M ab:

4

$$y_n = \sum_{m=0}^{M} a_m \, x_{n-m} \; - \; \sum_{m=1}^{M} b_m \, y_{n-m}$$

Die Gewichtung der Einflußgrößen $y_m$ und $x_m$ erfolgt mit einstellbaren Koeffizienten $a_m$ bzw. $b_m$. Die Anzahl M der Koeffizienten bestimmt den Grad des IIR-Filters. Im vorliegenden Ausführungsbeispiel wird eine Reihenschaltung von drei IIR-Filtern 2. Grades verwendet.

Die in Fig. 4a dargestellte Variable z ist die zur Zeitvariablen n konjungierte Variable im Frequenzbereich. Die Größe $z^{-1}$ stellt den Betrag der Verzögerung zwischen zwei Verknüpfungspunkten, z.B. $x_n$ und $x_{n-1}$ dar. Die Symbole x bzw. Σ charakterisieren eine multiplikative bzw. additive Verknüpfung.

Der Impulsformer 18 ist von einem nicht rekursiven FIR-Filter gebildet. Der prinzipielle Aufbau eines FIR-Filters ist in Fig. 4b dargestellt. Die Ausgangsgröße $y_n$ des FIR-Filters hängt von der Eingangsgröße $x_m$ (m = n, n - 1, n - 2,..., n-M) zu verschiedenen Zeitpunkten ab.

$$Y_n = \sum_{m=0}^{M} h_m \, x_{n-m}$$

Die Gewichtung der Eingangsgrößen $x_m$ erfolgt mit einstellbaren Koeffizienten $h_m$. Die Anzahl M der Koeffizienten $h_m$ bestimmt den Grad des Filters. Im vorliegenden Ausführungsbeispiel wird ein FIR-Filter 18. Grades verwendet.

Das digitalisierte und gefilterte Empfangssignal wird der Schwellwerteinheit 14 zugeführt und dort in eine binäre Signalfolge umgewandelt.

In Fig. 5 ist die obere Grenzfrequenz der Empfangssignale einer optoelektronischen Vorrichtung 1 für eine vorgegebene Abtastrate von 480 Scans / Sekunde in Abhängigkeit des Leseabstands d dargestellt. Die Grenzfrequenz liegt im Bereich einiger hundert kHz, für die Leseabstände d größer als 70 cm sogar oberhalb von 500 kHz. Bei derartig hohen Empfangssignalfrequenzen verursachen üblicherweise die Störungen im Empfangselement 4 Verzerrungen des Empfangssignals, die in derselben Größenordnung wie die Nutzsignale sind.

Um diese Störungen zu eliminieren, wird in einem ersten Verfahrensschritt die Frequenzabhängigkeit der Übertragungsfunktion des Empfangselementes 4 ermittelt, d.h. es wird der Frequenzgang der Amplitude und der Gruppenlaufzeit des Empfangssignals im Empfangssignal ermittelt. Die Gruppenlaufzeit ist definiert als das Differential d φ / d f, d.h.der Ableitung der Phase des Empfangssignals nach der Frequenz. Zweckmäßigerweise kann das Antwortverhalten des Empfangselements 4 durch Einspeisen eines vorgegebenen Signals und Messen der Phase und Amplitude des Ausgangssignals erfolgen. Vorteilhafterweise wird die Sprungantwort des Empfangselements gemessen und in die Impulsantwort umgerechnet.

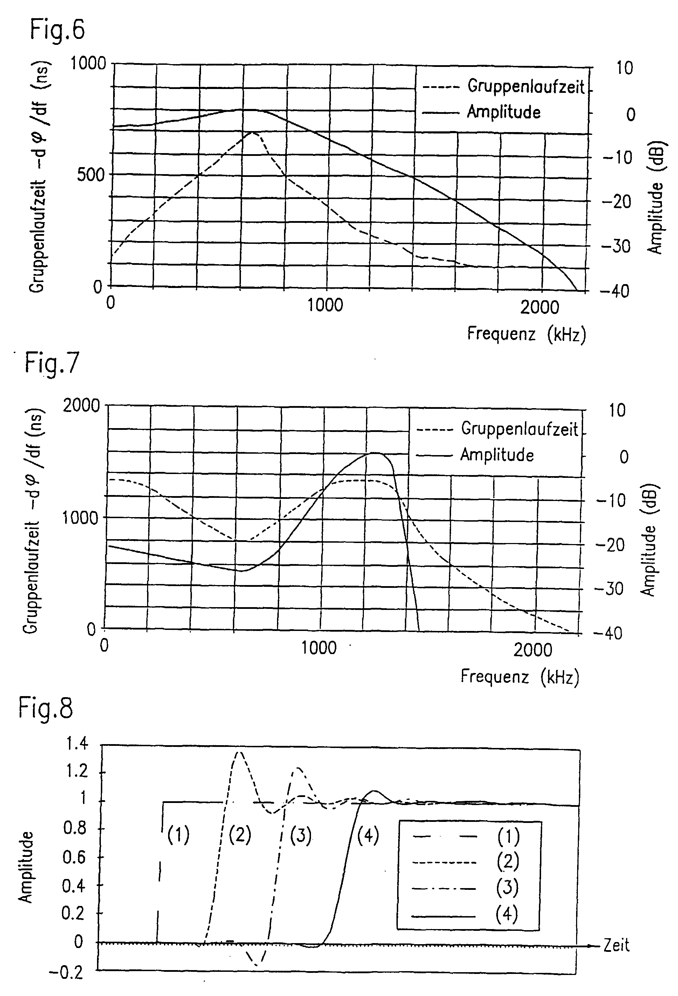

Für das vorliegende Ausführungsbeispiel ergibt sich das in Fig. 6 dargestellte Verhalten. Die Kennlinien des Empfangselements 4 weichen sehr stark vom idealen Verhalten, nämlich einer frequenzunabhängigen Amplitude und einer frequenzunabhängigen Gruppenlaufzeit, ab.

Die Grundidee des erfindungsgemäßen Verfahrens besteht darin, dem Empfangselement 4 eine Anordnung 16 von digitalen Filtern nachzuschalten, deren Übertragungsfunktion so ausgestaltet ist, daß Signalverzerrungen durch das Empfangselement 4 eliminiert werden, d.h. daß die Übertragungsfunktion des Gesamtsystems bestehend aus dem Empfangselement 4 und der Anordnung 16 der digitalen Filter so ausgebildet ist, daß der Frequenzgang der Gruppenlaufzeit zumindest im Frequenzbereich der Empfangssignale (Fig. 5) frequenzunabhängig ist und der Frequenzgang der Amplitude in diesem Frequenzbereich eine Gauss-Charakteristik aufweist.

Dies wird zum einen dadurch erreicht, daß der Frequenzgang der Gruppenlaufzeit des Empfangssignals im Phasenentzerrer 17 im wesentlichen von der Differenz einer Konstante und des Frequenzgangs der Gruppenlaufzeit des Empfangssignals im Empfangselement 4 gebildet ist (Fig. 7). Die Koeffizienten des den Impulsformer 18 bildenden digitalen Filters sind dagegen so gewählt, daß sie die Gruppenlaufzeit des Empfangssignals nicht beeinflussen.

Zum anderen sind die Koeffizienten des Impulsformers 18 so gewählt, daß das Produkt der Übertragungsfunktionen des Empfangselements 4 und des Impulsformers 18 eine Gauss-Charakteristik aufweist, wobei das Maximum der Gaussförmigen Übertragungsfunktion bei der Frequenz f = 0 liegt und zu höheren Frequenzen abfällt bis zu einer Frequenz $f_1$, bei der die Übertragungsfunktion den Wert 0 annimmt. Zweckmäßigerweise sind die Koeffizienten des den Phasenentzerrer 17 bildenden digitalen Filters so gewählt, daß der Phasenentzerrer 17 allein die Gruppenlaufzeit, nicht jedoch die Amplitude des Empfangssignals beeinflußt.

Dadurch wird erreicht, daß mittels des Phasenentzerrers 17 allein der Phasenverlauf und mittels des Impulsformers 18 allein die Amplitude des Empfangssignals optimiert wird.

Da im Empfangselement 4 die Amplitude bei hohen Frequenzen sehr klein ist, bzw. den Wert Null annimmt (Fig. 6), müßte die Amplitude im Impulsformer 18 bei hohen Frequenzen sehr groß werden bzw. den Wert unendlich annehmen, um ein ideales Übertragungsverhalten zu gewährleisten.

Da dies nicht realisierbar ist, erhält man oberhalb einer Grenzfrequenz $f_0$ für die Serienschaltung von Empfangselement 4 und Impulsformer 18 ein Abweichen vom Idealverhalten, nämlich eine mit steigender Frequenz abnehmende Amplitude. Dasselbe Verhalten gilt auch für den Frequenzgang der Gruppenlaufzeit.

Sofern die Grenzfrequenz $f_0$, bei der die Frequenzabhängigkeit die Übertragungsfunktion des Gesamtsystems von Empfangselement 4, Phasenentzerrer 17 und Impulsformer 18 einsetzt, oberhalb der Grenzfrequenz der Empfangssignale liegt, erhält man ein im wesentlichen verzerrungsfreies Übertragungsverhalten der Empfangssignale. Die Koeffizienten des IIR-Filters und des FIR.-Filters sind so gewählt, daß diese Bedingung erfüllt ist.

In Fig. 8 ist der Einfluß der digitalen Filter auf den Signalverlauf des Empfangssignals veranschaulicht. Der Übersicht halber sind in Fig. 8 die verschiedenen Kurvenverläufe zeitlich versetzt dargestellt.

Das ideale, nicht verzerrte Empfangssignal (1) besteht aus einer Stufenfunktion. Dies entspricht dem Übergang von einem schwarzen zu einem weißen Strichelement 2a, b eines Barcode-Symbols 2.

Beim Durchgang durch das Empfangselement 4 wird das Empfangssignal verzerrt und weist den mit (2) gekennzeichneten Kurvenverlauf auf. Am Ausgang des Phasenentzerrers 17 sind die Phasenfehler des Empfangssignals (3) weitgehend eliminiert, so daß die Überschwinger beim Anstieg des Empfangssignals vom Signalwert 0 auf den Signalwert 1 symmetrisch zur Zeitachse ausgebildet sind. Durch den Impulsformer 18 wird das Empfangssignal geglättet, so daß am Ausgang des Impulsformers 19 im Signalverlauf (4) nahezu keine Überschwinger mehr vorhanden sind. Im Ergebnis wird durch den Einsatz der digitalen Filter 17, 18 aus dem im Empfangselement verzerrten Empfangssignal (2) nahezu der ideale Signalverlauf (1) zurückgewonnen.

Die erfindungsgemäße Anordnung 16 von digitalen Filtern gewährleistet eine Kompensation von bauteilbedingten Signalverzerrungen. In die Wahl der Koeffizienten der Filter 17, 18 gehen allein Bauteilparameter ein, insbesondere die Charakteristik der Übertragungsfunktion des Empfangselements 4. Demzufolge ist diese Kompensation unabhängig von den Parametern des Sendelichtstrahls 8, insbesondere vom Leseabstand d, vom Strahldurchmesser und der Strahlform.

**Patentansprüche**

1.  Verfahren zur Kompensation bauteilbedingter Signalverzerrungen für eine optoelektronische Vorrichtung zum Erkennen von mit definierten Kontrastmustern versehenen Marken, insbesondere Barcode-Symbolen, gekennzeichnet durch folgende Verfahrensschritte:

    -   einer experimentellen Bestimmung der Übertragungsfunktion der Gesamtheit der signalverzerrenden Bauelemente (4)

    -   einer optischen Abtastung der Marken, wobei das von den Marken reflektierte Empfangslicht in den signalverzerrenden Bauelementen in ein analoges, elektrisches Empfangssignal gewandelt wird,

    -   einer Umwandlung des analogen Empfangssignals in ein digitalisiertes Empfangssignal

    -   einer Filterung des digitalisierten Empfangssignals in einer Anordnung (16) von digitalen Filtern, deren Übertragungsfunktion so gewählt ist, daß die Verknüpfung der Übertragungsfunktionen der signalverzerrenden Bauelemente mit der Übertragungsfunktion der Anordnung von digitalen Filtern innerhalb eines vorgebbaren Frequenzbereichs eine im wesentlichen frequenzunabhängige Durchlaßcharakteristik der Gruppenlaufzeit des Empfangssignals und eine gaussförmige Durchlaßcharakteristik der Amplitude des Empfangssignals ergibt.

    -   einer Umwandlung des gefilterten, digitalisierten Empfangssignals in eine binäre Signalfolge mittels einer Schwellwerteinheit (14).

2.  Verfahren nach Anspruch 1, dadurch gekennzeichnet, daß der vorgebbare Frequenzbereich die Frequenzen des Empfangssignals umfaßt.

3.  Optoelektronische Vorrichtung zum Erkennen von mit definierten Kontrastmustern versehenen Marken, insbesondere Barcode-Symbolen, mit einem Sendelicht emittierenden Sendeelement (3) und einem Empfangselement (4), wobei das Sendelicht über die Marken geführt wird und das von den Marken reflektierte Empfangslicht eine durch den Kontrast der Marken aufgeprägte Amplitudenmodulation aufweist, wobei das Empfangslicht im Empfangselement in ein das Empfangssignal bildende Spannungssignal umgesetzt wird, welches Spannungssignal zur Auswertung der Kontrastmuster einer Schwellwerteinheit (14) zugeführt wird, in der das Empfangssignal in eine binäre Signalfolge umgewandelt wird, dadurch gekennzeichnet, daß eine Kompensationseinrichtung vorgesehen ist bestehend aus einem n-bit-Analog-Digitalwandler (15), dessen Wortbreite n des Analog-Digitalwandlers (15) größer als eins ist und einer der Schwellwerteinheit (14) vorgeschalteten Anordnung (16) von digitalen Filtern, deren Übertragungsfunktion so gewählt ist, daß die Verknüpfung der Übertragungsfunktion des Empfangselements (4) mit der Übertragungsfunktion der Anordnung (16) von digitalen Filtern innerhalb eines vorgebbaren Frequenzbereichs eine im wesentlichen frequenzunabhängige Durchlaßcharakteristik der Gruppenlaufzeit des Empfangssignals und eine gaussförmige Durchlaßcharakteristik der Amplitude des Empfangssignals ergibt.

4.  Vorrichtung nach Anspruch 3, dadurch gekennzeichnet, daß die Anordnung (16) von digitalen Filtern zwei in Serie geschaltete digitale Filter aufweist.

5.  Vorrichtung nach Anspruch 3 oder 4, dadurch gekennzeichnet, daß das erste digitale Filter einen Phasenentzerrer (17) bildet, der frequenzselektiv die Gruppenlaufzeit des Empfangssignals ändert.

6.  Vorrichtung nach Anspruch 5, dadurch gekennzeichnet, daß der Frequenzgang der Gruppenlaufzeit des Empfangssignals im Phasenentzerrer (17) im wesentlichen der Differenz zwischen einer Konstante und dem Frequenzgang der Gruppenlaufzeit der Empfangssignale im Empfangselement (4) entspricht.

7.  Vorrichtung nach Anspruch 5 oder 6, dadurch gekennzeichnet, daß der Phasenentzerrer (17) von einem IIR-Filter mit einstellbaren Koeffizienten gebildet ist.

8.  Vorrichtung nach Anspruch 7, dadurch gekennzeichnet, daß das IIR-Filter als Reihenschaltung von drei IIR-Filtern 2. Grades ausgebildet ist.

9.  Vorrichtung nach einem der Ansprüche 3 - 8, dadurch gekennzeichnet, daß das zweite Filter einen Impulsformer (18) bildet, der frequenzselektiv die Amplitude des Empfangssignals ändert.

10. Vorrichtung nach Anspruch 9, dadurch gekennzeichnet, daß das Produkt des Frequenzganges der Amplitude des Empfangssignals im Impulsformer (18) und des Frequenzganges der Amplitude des Empfangssignals im Empfangselement (4) unterhalb einer Grenzfrequenz im wesentlichen einer Gauss-Funktion entspricht.

11. Vorrichtung nach Anspruch 10, dadurch gekennzeichnet, daß die Grenzfrequenz im Bereich von 1 - 2 MHz liegt.

12. Vorrichtung nach einem der Ansprüche 9 - 11, dadurch gekennzeichnet, daß der Impulsformer (18) von einem FIR-Filter mit einstellbaren Koeffizienten gebildet ist.

13. Vorrichtung nach Anspruch 12, dadurch gekennzeichnet, daß das FIR-Filter als Filter 18. Grades ausgebildet ist.

14. Vorrichtung nach einem der Ansprüche 3 - 13, dadurch gekennzeichnet, daß die Wortbreite des n-bit-Analog-Digitalwandlers (15) im Bereich $8 \leq n \leq 12$ liegt.

15. Vorrichtung nach einem der Ansprüche 3 - 14, dadurch gekennzeichnet, daß das Sendeelement (3) einen Laser als Sender (6) aufweist, sowie eine Ablenkeinheit (9), mit der das Sendelicht (8) über die Marken geführt wird, und daß das Empfangselement (4) eine Fotodiode (11) und einen Verstärker (12) zur Verstärkung des Empfangssignals aufweist.

## Claims

1.  Method of compensating for signal distortions, which are caused by componentry, for an opto-electronic device for recognition of marks, especially bar code symbols, provided with defined contrast patterns, characterised by the following method steps:

- an experimental determination of the transfer function of the totality of the signal-distorting components (4),

- an optical scanning of the marks, wherein the received light reflected by the marks is converted in the signal-distorting components into an analog electrical reception signal,

- a conversion of the analog reception signal into a digitalised reception signal,

- a filtering of the digitalised reception signal in an arrangement (16) of digital filters, the transfer function of which is so selected that the linking of the transfer functions of the signal-distorting components with the transfer function of the arrangement of digital filters within a presettable frequency range gives a substantially frequency-independent transmission characteristic of the group transit time of the reception signal and a Gaussian transmission characteristic of the amplitude of the reception signal, and

- a conversion of the filtered digitalised reception signal into a binary signal sequence by means of a threshold value unit (14).

2. Device according to claim 1, characterised in that the presettable frequency range comprises the frequencies of the reception signal.

3. Opto-electronic device for recognition of marks, especially bar code symbols, provided with defined contrast patterns, comprising a transmitting element (3) which emits transmission light, and a receiving element (4), wherein the transmission light is guided over the marks and the reception light reflected by the marks has a modulation in amplitude imposed by the contrast of the marks, wherein the reception light is converted in the receiving element into a voltage signal which forms the reception signal and is fed, for an evaluation of the contrast pattern, to a threshold value unit (14) in which the reception signal is converted into a binary signal sequence, characterised in that a compensation device is provided consisting of an n bit analog-to-digital converter (15), the word width n of which analog-to-digital converter (15) is greater than one and of an arrangement (16), which is connected in front of the threshold value unit (14) of digital filters, the transfer function of which is so selected that the linking of the transfer function of the receiving element (4) with the transfer function of the arrangement (16) of digital filters within a presettable frequency range gives a substantially frequency-independent transmission characteristic of the group transit time of the reception signal and a Gaussian transmission characteristic of the amplitude of the reception signal.

4. Device according to claim 3, characterised in that the arrangement (16) of digital filters comprises two digital filters connected in a series.

5. Device according to claim 3 or 4, characterised in that the first digital filter forms a phase anti-distortion device (17), which changes the group transit time of the reception signal in frequency-selective manner.

6. Device according to claim 5, characterised in that the frequency course of the group transit time of the reception signal in the phase anti-distortion device (17) substantially corresponds to the difference between a constant and the frequency course of the group transit time of the reception signals in the receiving element (4).

7. Device according to claim 5 or 6, characterised in that the phase anti-distortion device (17) is formed by an IIR filter with settable coefficients.

8. Device according to claim 7, characterised in that the IIR filter is constructed as a series circuit of three IIR filters of the second grade.

9. Device according to one of claims 3 to 8, characterised in that the second filter forms a pulse former (18), which changes the amplitude of the reception signal in frequency-selected manner.

10. Device according to claim 9, characterised in that the product of the frequency course of the amplitude of the reception signal in the pulse former (18) and of the frequency course of the amplitude of the reception signal in the receiving element (4) below a limit frequency substantially corresponds to a Gaussian function.

11. Device according to claim 10, characterised in that the limit frequency lies in the range of 1 to 2 megahertz.

**EP 0 686 290 B1**

12. Device according to one of claims 9 to 11, characterised in that the pulse former (18) is formed by an FIR filter with settable coefficients.

13. Device according to claim 12, characterised in that the FIR filter is constructed as a filter of the 18th grade.

14. Device according to one of claims 3 to 13, characterised in that the word width of the n bit analog-to-digital converter (15) lies in the range of $8 \leq n \leq 12$.

15. Device according to one of claims 3 to 14, characterised in that the transmitting element (3) comprises a laser as transmitter (6), as well as a deflecting unit (9) by which the transmission light (8) is guided over the marks, and that the receiving element (14) comprises a photodiode (11) and an amplifier (12) for amplification of the reception signal.

**Revendications**

1. Procédé pour compenser des distorsions de signaux dues à des composants, pour un dispositif optoélectronique de reconnaissance de repères pourvus de modèles définis de contraste, notamment de symboles de code barres, **caractérisé** par les étapes suivantes :

   - détermination expérimentale de la fonction de transmission de la globalité des composants (4) distordant les signaux,
   - balayage optique des repères, la lumière reçue réfléchie par les repères étant transformée, dans les composants distordant les signaux, en un signal reçu électrique analogique,
   - transformation du signal reçu analogique en un signal reçu numérisé
   - filtration du signal reçu numérisé dans un agencement (16) de filtres numériques dont la fonction de transmission est choisie de telle sorte que la combinaison de la fonction de transmission des composants distordant les signaux avec la fonction de transmission de l'agencement de filtres numériques à l'intérieur d'une plage de fréquences prédéfinissable fournit une courbe de réponse, essentiellement indépendante de la fréquence, du temps de propagation de groupe du signal reçu, et une courbe de réponse gaussienne de l'amplitude du signal reçu,
   - transformation du signal reçu numérisé et filtré en une série de signaux binaires, au moyen d'une unité (14) à valeur de seuil.

2. Procédé selon la revendication 1, **caractérisé** en ce que la plage de fréquences prédéfinissable englobe les fréquences du signal reçu.

3. Dispositif optoélectronique de reconnaissance de repères pourvus de modèles définis de contraste, notamment de symboles de code barres, avec un élément émetteur (3) émettant de la lumière et un élément récepteur (4), la lumière émise étant dirigée sur les repères et la lumière reçue réfléchie par les repères présentant une modulation d'amplitude portant l'empreinte du contraste des repères, la lumière reçue étant transformée dans l'élément récepteur en un signal de tension constituant le signal reçu, signal de tension qui est apporté, afin d'interpréter le modèle de contraste, à une unité (14) à valeur de seuil dans laquelle le signal reçu est transformé en une série de signaux binaires, **caractérisé** en ce qu'il est prévu un dispositif compensateur, constitué d'un convertisseur analogique-numérique (15) à n bits, dont la largeur de mot <u>n</u> est supérieure à 1, et d'un agencement (16), précédant l'unité (14) à valeur de seuil, de filtres numériques dont la fonction de transmission est choisie de telle sorte que la combinaison de la fonction de transmission de l'élément récepteur (4) avec la fonction de transmission de l'agencement (16) de filtres numériques à l'intérieur d'une plage de fréquences prédéfinissable fournit une courbe de réponse, essentiellement indépendante de la fréquence, du temps de propagation de groupe du signal reçu, et une courbe de réponse gaussienne de l'amplitude du signal reçu.

4. Dispositif selon la revendication 3, **caractérisé** en ce que l'agencement (16) de filtres numériques comprend deux filtres numériques montés en série.

5. Dispositif selon la revendication 3 ou 4, **caractérisé** en ce que le premier filtre numérique constitue un correcteur de phase (17), qui modifie le temps de propagation de groupe du signal reçu de façon sélective en fréquence.

6. Dispositif selon la revendication 5, **caractérisé** en ce que la réponse en fréquence du temps de propagation de groupe du signal reçu dans le correcteur de phase (17) correspond essentiellement à la différence entre une constante et la réponse en fréquence du temps de propagation de groupe des signaux reçus dans l'élément récepteur (4).

7. Dispositif selon la revendication 5 ou 6, **caractérisé** en ce que le correcteur de phase (17) est formé par un filtre IIR à coefficients réglables.

8. Dispositif selon la revendication 7, **caractérisé** en ce que le filtre IIR est constitué du montage en série de trois filtres IIR de degré 2.

9. Dispositif selon une des revendications 3 à 8, **caractérisé** en ce que le deuxième filtre constitue un formateur d'impulsions (18), qui modifie l'amplitude du signal reçu de façon sélective en fréquence.

10. Dispositif selon la revendication 9, **caractérisé** en ce que le produit de la réponse en fréquence de l'amplitude du signal reçu dans le formateur d'impulsions (18) et de la réponse en fréquence de l'amplitude du signal reçu dans l'élément récepteur (4) correspond essentiellement, en dessous d'une fréquence limite, à une fonction gaussienne.

11. Dispositif selon la revendication 10, **caractérisé** en ce que la fréquence limite se situe dans la plage de 1 à 2 MHz.

12. Dispositif selon une des revendications 9 à 11, **caractérisé** en ce que le formateur d'impulsions (18) est formé par un filtre FIR à coefficients réglables.

13. Dispositif selon la revendication 12, **caractérisé** en ce que le filtre FIR est réalisé sous forme de filtre de degré 18.

14. Dispositif selon une des revendications 3 à 13, **caractérisé** en ce que la largeur de mot du convertisseur analogique-numérique (15) à n bits se situe dans la plage $8 \leq n \leq 12$.

15. Dispositif selon une des revendications 3 à 14, **caractérisé** en ce que l'élément émetteur (3) comprend un laser comme émetteur (6), ainsi qu'une unité de déflexion (9), par laquelle la lumière émise (8) est dirigée sur les repères, et en ce que l'élément récepteur (4) comprend une photodiode (11) et un amplificateur (12) pour amplifier le signal reçu.

Fig.1

Fig.2

Störungen

Empfangssignal

Fig.3

a) → Ort

b) → Zeit

c) $S_1$ $S_2$ → Zeit

d) 1 0 → Zeit

# Fig.4

a) Eingang

b) Eingang

# Fig.5

Abstand d (cm)   (Abtastrate: 480 Scan/sec)

Fig.6

Fig.7

Fig.8